# EUROPEAN PATENT SPECIFICATION

(11) **EP 4 167 308 B1**
(45) Date of publication and mention of the grant of the patent: **29.10.2025**
(21) Application number: 21919131.9
(22) Date of filing: 23.12.2021
(51) Int. Cl.: H01M 4/04, H01M 4/13, H01M 4/139, H01M 10/0525, H01M 4/36, H01M 4/62

(54) **ELECTRODE PLATE AND PREPARATION METHOD THEREFOR, AND BATTERY**
ELEKTRODENPLATTE UND HERSTELLUNGSVERFAHREN DAFÜR SOWIE BATTERIE
ÉLECTRODE PLANE ET SON PROCÉDÉ DE PRÉPARATION, ET BATTERIE

(30) Priority: 12.01.2021 CN 202110035611
(43) Date of publication of application: 19.04.2023
(73) Proprietor: Eve Energy Co., Ltd., Huizhou, Guangdong 516006 (CN)
(72) Inventor: ZHU, Liang, Huizhou, Guangdong 516006 (CN); ZHAO, Ruirui, Huizhou, Guangdong 516006 (CN); QIU, Xinbin, Huizhou, Guangdong 516006 (CN); ZHU, Yuan, Huizhou, Guangdong 516006 (CN); LIU, Jianhua, Huizhou, Guangdong 516006 (CN); LIU, Jincheng, Huizhou, Guangdong 516006 (CN)
(74) Representative: Grünecker Patent- und Rechtsanwälte PartG mbB
(86) International application number: PCT/CN2021/140823
(87) International publication number: WO 2022/151944

(56) References cited:
- CN-A- 105 810 881
- CN-A- 105 810 881
- CN-A- 108 091 827
- CN-A- 109 326 766
- CN-A- 112 201 764
- CN-A- 112 864 346
- DE-A1- 102017 208 220
- JP-A- 2015 201 318
- JP-A- 2019 106 311
- US-A1- 2016 211 504
- US-A1- 2018 138 515

## Description

### TECHNICAL FIELD

The present disclosure belongs to the technical field of batteries, and relates to an electrode sheet, a preparation method thereof, and a battery.

### BACKGROUND

With the advancement of science and technology, lithium batteries are more and more widely used in life; they can be found in various fields from small household appliances to new energy vehicles and to large-scale energy storage. At present, the mainstream cathode systems include LCO, NCM, NCA, LFP, LMO, etc. The anode systems include artificial graphite, natural graphite, LTO, Si-C composite, artificial and natural composite systems, etc., and its structure is diverse, including square, cylindrical and button-type lithium battery; according to the outsourcing material, it is divided into aluminum shell, steel shell and soft-pack lithium battery. Square aluminum shell batteries are widely used in lithium power and energy storage due to their advantages of simple structure, high energy density, flexible size, simple pack grouping, and high packaging reliability. Among them, LiFePO₄ with olivine structure has the advantages of good structural stability, stable discharge platform, good cycle performance, wide source of raw materials, low price and no environmental pollution, it has been widely used in the two fields of power and energy storage, and the square aluminum shell LFP battery is the most common.

The positive electrode sheet material is an important factor that determines the performance and cost of lithium batteries, and it is a key technological breakthrough direction for improving battery energy density; the negative electrode with excellent performance has high specific energy, low electrode potential, and good lithium-deintercalation stability, and it is the key to affecting the performance of the battery; the main function of the diaphragm is to separate the positive and negative electrode of the lithium battery, prevent the two electrodes from contacting and short circuit, and allow the ions of the electrolyte to pass through; the electrolyte is the "blood" of the lithium battery, and through the electrolyte, Li⁺ is deintercalated back-and-forth between the positive and negative electrodes, and affects the key performance of the battery at the same time, such as safety, high and low temperature performance, and power performance. The electrolyte is generally composed of solvents, lithium salts and additives in a certain proportion, and the composition is different according to different electrical performance requirements. During the use of the battery, the electrolyte will be consumed, especially for batteries with long cycle life.

The amount of liquid retention is as large as possible to satisfy the consumption of electrolyte during the cycle.

In the current electrode sheet preparation process, the main problems are: 1. the distribution of pores inside an electrode sheet is not uniform, resulting in different current densities in different regions of an electrode sheet during the battery discharge process, which cannot maximize the discharge capacity of the battery; 2. the depth of discharge in different regions of an electrode sheet is different, and the expansion situation is also different. During the discharge process of the battery, the resistance of the battery is likely to increase due to the separation of the active material and the current collector (powder dropping), and the pulse capacity in the final stage decreases rapidly; in serious cases, there may be an internal short circuit in the battery caused by partial powder dropping.

CN107919459A discloses a preparation method of a lithium ion battery negative electrode sheet, a lithium ion battery negative electrode sheet and a lithium ion battery, which belongs to the technical field of lithium ion batteries. The preparation method of the negative electrode sheet of the lithium ion battery comprises the following steps: mixing the negative electrode material with water uniformly to prepare the negative electrode slurry; the negative electrode material comprises a negative electrode active material, a conductive agent, a binder, and an additive. The mass ratio of the negative electrode active material, the conductive material agent, the binder and the additive is 85.5-95.5:1-3:1.5-3.5:2-8; the additive is at least one of ethylene carbonate and propylene carbonate; the prepared negative slurry material is coated on the negative electrode current collector and dried to obtain the material.

CN103531811A discloses a method for preparing a positive electrode sheet for a lithium ion battery, comprising the following steps: according to a solid-liquid ratio of (0.1-2 g):100 mL, refluxing a carbon material in a mixed acid composed of concentrated nitric acid and concentrated sulfuric acid to obtain the carboxylated carbon material; according to the solid-liquid ratio of (0.1-2 g):100 mL, refluxing the carboxylated carbon material in diphenol chloride to obtain the carbon material of acyl chloride; according to the solid-liquid ratio of (0.1-1 g): 100 mL: 200 mL, the acyl-chlorinated carbon material and ethylenediamine are refluxed in anhydrous toluene to obtain an amidated carbon material; the amidated carbon material is dissolved in water to form a dispersion; the current collector is soaked in the dispersion liquid, and then the current collector is alternately soaked in the dispersion liquid and Li₂C₆O₆ solution, and dried to obtain the positive electrode sheet for the lithium ion battery.

However, the above methods all have the problems of uneven thickness of the electrode sheet and poor discharge capacity at large currents.

US2016/0211504A1 relates to a method of manufacturing an electrode, including forming wet granules; and forming an electrode mixture layer on an electrode current collector by rolling the formed wet granules. When the wet granules are formed, a conductive material and fine particles having a primary particle diameter of 20 nm or smaller are stirred and mixed with each other, and the stirred mixture and an electrode active material are stirred and mixed with each other. During the stirring when the wet granules are formed, a peripheral speed of a stirring blade included in a stirrer is 10 m/s or higher.

### SUMMARY

The purpose of the present disclosure is to provide an electrode sheet, a preparation method thereof, and a battery. The preparation method of the electrode sheet provided by the present disclosure can improve the consistency of the thickness of the diaphragm in the process of diaphragm-forming, and can make the distribution of the inner hole of the electrode sheet more uniform, the porosity is better, and the discharge capacity of the battery can be improved.

In order to achieve the above object, the present disclosure provides the technical solutions described below.

In a first aspect, a production method for preparing an electrode sheet, including the following steps:
(1) mixing and granulating an active material, a conductive agent, a solvent and a binder to obtain mixed particles; and
(2) performing diaphragm forming on the mixed particles described in step (1) and a current collector in a laminating machine to obtain the electrode sheet, wherein the numbers of rolls of the laminating machine is 3 or more;

wherein the mixing and granulating of step (1) is performed with a granulator, a rotating speed of the granulator is 50-1200 rpm, a mixing and granulating time of step (1) is 1-10 min;
wherein a roll spacing of the laminating machine described in step (2) is 0.05-0.5 mm;
wherein a rotation speed of the rollers of the laminating machine described in step (2) is 1-10 r/min.

In the preparation method provided by the present disclosure , the purpose of making uniform particles is achieved by mixing and granulating described in step (1), a laminating machine with multiple rollers is used to first form the mixed particles into sheet described in step (2), and then press the sheet on a current collector to improve uniformity. The mutual cooperation of the above two steps enables the electrode sheet obtained by the method of the present disclosure to have better porosity under the condition of maintaining a higher compaction density, so that the battery prepared by these steps has better discharge capacity, especially in larger current and lower temperature conditions.

In the present disclosure, the numbers of rolls of the laminating machine is 3, 4, or 5, etc. When the numbers of rolls of the laminating machine is 3 or more, because the diaphragm is formed in advance, the adhesion between the active substances and the thickness uniformity can be improved, so the effect is much better than that of using a two-roll laminating machines (2 rolls).

The following are optional technical solutions of the present disclosure, but not as limitations of the technical solutions provided by the present disclosure. Through the following technical solutions, the technical purposes and advantages of the present disclosure can be better achieved and realized.

As an optional technical solution of the present disclosure, the electrode sheet is a positive electrode sheet or a negative electrode sheet.

Optionally, the active material described in step (1) includes any one or a combination of at least two of manganese dioxide, lithium manganate, lithium cobaltate, lithium nickel cobalt manganate, lithium nickel cobalt aluminate, lithium iron phosphate, graphite and silicon carbon material. Typical but non-limiting combinations are: a combination of manganese dioxide and lithium manganate, a combination of lithium manganate and lithium cobaltate, a combination of lithium cobaltate and lithium nickel cobalt manganate, a combination of graphite and silicon carbon materials, etc.

Optionally, the conductive agent described in step (1) includes any one or a combination of at least two of carbon black, graphite, graphene or carbon nanotubes. Typical but non-limiting combinations are: a combination of carbon black and graphene, a combination of graphite and graphene, a combination of graphene and carbon nanotubes, etc.

Optionally, the binder described in step (1) includes any one or a combination of at least two of styrene-butadiene rubber, polytetrafluoroethylene, polyvinyl fluoride, sodium carboxymethyl cellulose, polyvinylidene fluoride or lithium polyacrylate. Typical but non-limiting combinations are: a combination of styrene-butadiene rubber and polytetrafluoroethylene, a combination of polytetrafluoroethylene and polyvinyl fluoride, a combination of polyvinyl fluoride and sodium carboxymethyl cellulose, a combination of polyvinylidene fluoride and lithium polyacrylate, etc.

Optionally, the solvent described in step (1) is any one or a combination of at least two of water, ethanol, ethylene glycol, glycerol, isopropanol, n-butanol, 1-methyl pyrrolidone (NMP) or N, N-dimethylformamide (DMF). Typical but non-limiting combinations are: a combination of water and ethanol, a combination of water and isopropanol, a combination of water and ethylene glycol, etc.

As an optional technical solution of the present disclosure, the mass ratio of the active material, conductive agent, solvent and binder described in step (1) is (58-88):(1-6):(10-3 0):(1-6), such as 58:6:30:6; 61:6:27:6; 66:6:22:6; 70:6:18:6; 75:2:18:5; 80:3:12:5 or 88:1: 10:1.

As an optional technical solution of the present disclosure, the mixing and granulation described in step (1) is performed with a granulator.

The rotational speed of the granulator is 50-1200 rpm, such as 50 rpm, 100 rpm, 200 rpm, 300 rpm, 400 rpm, 500 rpm, 600 rpm, 700 rpm, 800 rpm, 900 rpm, 1000 rpm, 1100 rpm or 1200 rpm.

The mixing and granulating time of step (1) is 1-10 min, such as 1 min, 1.5 min, 2 min, 2.5 min, 3 min, 3.5 min, 4 min, 4.5 min, 5 min, 5.5 min , 6 min, 6.5 min, 7 min, 7.5 min, 8 min, 8.5 min, 9 min, 9.5 min or 10 min, but it is not limited to the listed values, other unlisted values within the numerical range are also applicable.

By using the above-mentioned granulator rotation speed and mixing granulation time, the uniformity of the particles can be controlled, further, the consistency of the thickness of the composite diaphragm and the pore distribution of the electrode sheet can be controlled.

As an optional technical solution of the present disclosure, the current collector described in step (2) includes any one or a combination of at least two of steel mesh, aluminum mesh, copper mesh, nickel mesh, aluminum foil and copper foil combination.

As an optional technical solution of the present disclosure, the temperature of the diaphragm forming described in step (2) is 15-35°C, that is, the diaphragm forming at room temperature.

Optionally, the laminating machine described in step (2) is a three-roll laminating machine or a four-roll laminating machine.

As a technical solution of the present disclosure, the distance between the rolls of the laminating machine described in step (2) is 0.05-0.5 mm, such as 0.05 mm, 0.1 mm, 0.2 mm, 0.3 mm, 0.4 mm or 0.5 mm, in the present disclosure, if the roller spacing is too large, it will lead to weak adhesion between the diaphragm and the current collector; if the roller spacing is too small, it will cause jamming.

The rotational speed of the rollers of the laminating machine described in step (2) is 1-10 r/min, such as 1 r/min, 2 r/min, 3 r/min, 4 r/min, 5 r/min, 6 r/min, 7 r/min, 8 r/min, 9 r/min or 10 r/min. In the present disclosure, if the rotational speed of the rollers of the laminating machine is too high, the uniformity of the electrode sheet will be deteriorated; if the rotational speed of the rollers of the laminating machine is too low, it will cause material jamming.

Optionally, step (2) further includes baking the product obtained after the diaphragm forming.

Optionally, the temperature of the baking is 100-300°C, such as 100°C, 120°C, 140°C, 160°C, 200°C, 250°C or 300°C, but it is not limited to the values listed, other unlisted values within the range of values are also applicable.

Optionally, the baking time is 5-28 h, such as 5 h, 8 h, 12 h, 16 h, 20 h, 24 h, 26 h, 27 h or 28 h, but it is not limited to the values listed, other unlisted values within the range of values are also applicable.

As a further optional technical solution of the method described in the present disclosure, the method comprises the following steps:
(1) mixing and granulating an active material, a conductive agent and a binder in a granulator for 1-10 min to obtain mixed particles;
(2) performing diaphragm forming on the mixed particles described in step (1) and a current collector in a laminating machine, and after the diaphragm forming, an obtained product is baked at 100-300°C for 5-28 h to obtain the electrode sheet, wherein the laminating machine is a three-roll laminating machine or a four-roll laminating machine;

wherein, the electrode sheet is a positive electrode sheet or a negative electrode sheet;
the active material described in step (1) includes any one or a combination of at least two of manganese dioxide, lithium manganate, lithium cobaltate, lithium nickel cobalt manganate, lithium nickel cobalt aluminate, lithium iron phosphate, graphite or silicon carbon materials.
the conductive agent described in step (1) includes any one or a combination of at least two of carbon black, graphite, graphene and carbon nanotubes;
the binder described in step (1) includes any one or a combination of at least two of styrene-butadiene rubber, polytetrafluoroethylene, polyvinyl fluoride, sodium carboxymethyl cellulose, polyvinylidene fluoride and lithium polyacrylate;
the solvent described in step (1) is any one or a combination of at least two of water, ethanol, ethylene glycol, glycerol, isopropanol, n-butanol, 1-methyl pyrrolidone(NMP) and N, N-dimethylformamide (DMF);
the mass ratio of the active material, the conductive agent, the solvent and the binder described in step (1) is (58-88):(1-6):(10-30):(1-6);
the current collector described in step (2) includes any one or a combination of at least two of steel mesh, aluminum mesh, copper mesh, nickel mesh, aluminum foil and copper foil;
the current collector described in step (2) includes any one or a combination of at least two of steel mesh, aluminum mesh, copper mesh, nickel mesh, aluminum foil and copper foil; and
the roller spacing of the laminating machine described in step (2) is 0.05-0.25 mm; the rotational speed of the rollers of the laminating machine described in step (2) is 1-10 r/min.

In a second aspect, the present disclosure provides an electrode sheet prepared by the preparation method described in the first aspect.

Optionally, on the electrode sheet, the thickness of the diaphragm is 0.2-1.0 mm;

Optionally, the compaction density of the electrode sheet is 1.5-3.0 g/cm³.

In a third aspect, the present disclosure provides a battery comprising the electrode sheet according to the second aspect.

Compared with the prior art, the present disclosure has the advantages described below:
(1) the preparation method provided in the present disclosure can enable the electrode sheet to obtain a better porosity while maintaining a higher compaction density, so that the battery has a better discharge capacity, especially under the conditions of larger current and lower temperature, the thickness consistency of the electrode sheet is good, and the overall standard deviation of the electrode sheet thickness is within 0.005 mm.
(2) the electrode sheet preparation method provided by the present disclosure has a simple manufacturing process and a high level of automation, and can realize one process output from material feeding to the electrode sheet forming.

### BRIEF DESCRIPTION OF DRAWINGS

FIG. 1 is a schematic flow sheet of the preparation method of Example 1;
FIG. 2 is a schematic diagram of the laminating machine in the preparation method of Example 1, and the numbers 1, 2 and 3 marked in the diagram represent the numbers of the rollers;
FIG. 3 is a schematic diagram of the laminating machine in the preparation method of Example 2, and the numbers 1, 2, 3 and 4 marked in the diagram represent the numbers of the rollers;
FIG. 4 is the schematic diagram of the laminating machine in the preparation method of Comparative Example 1.

### DETAILED DESCRIPTION

In order to better illustrate the present disclosure and facilitate the understanding of the technical solutions of the present disclosure, the present disclosure will be described in further detail below. The following embodiments are only simple examples of the present disclosure, and do not represent or limit the protection scope of the present disclosure. The protection scope of the present disclosure is subject to the claims.

The following are typical but non-limiting examples of the present disclosure:

### Example 1

This embodiment was prepared according to the following method:
(1) mixing 78wt% LiFePO₄ with 2wt% conductive carbon fully, and then mixing with 3% polytetrafluoroethylene binder and 17wt% ethanol/water (1/2) mixed solvent fully, the mixed particles were prepared by a high-speed granulator at a roller speed of 1000 rpm for 5 min.
(2) the mixed particles mentioned described in step (1) were formed with a three-roll laminating machine (the distance between roll 1 and roll 2 is 0.1 mm, and the distance between roll 2 and roll 3 is 0.08 mm) ,at the temperature of 25°C to form a diaphragm with a current collector aluminum foil at a roller speed of 3 r/min, and then placed in the oven at 120°C to bake for 8 h, and cut to obtain a positive electrode sheet .

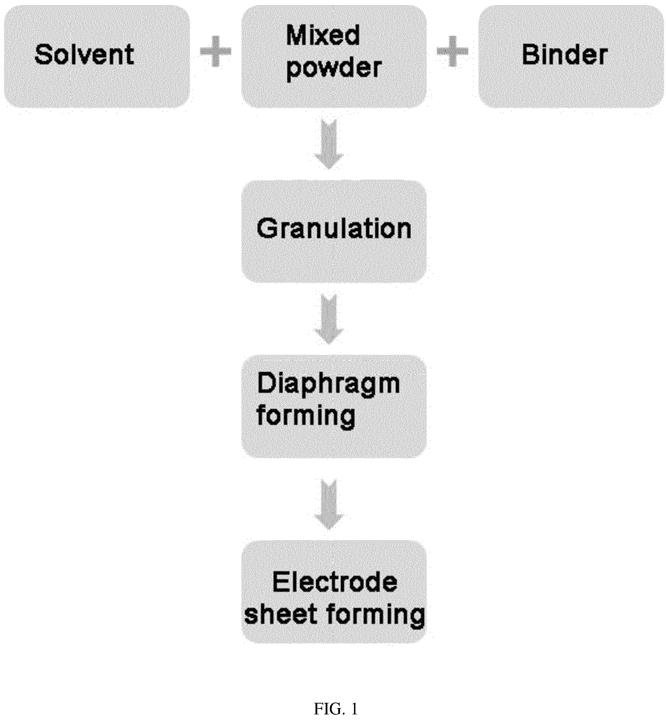

The schematic flow diagram of the preparation method of this embodiment is shown in FIG. 1.

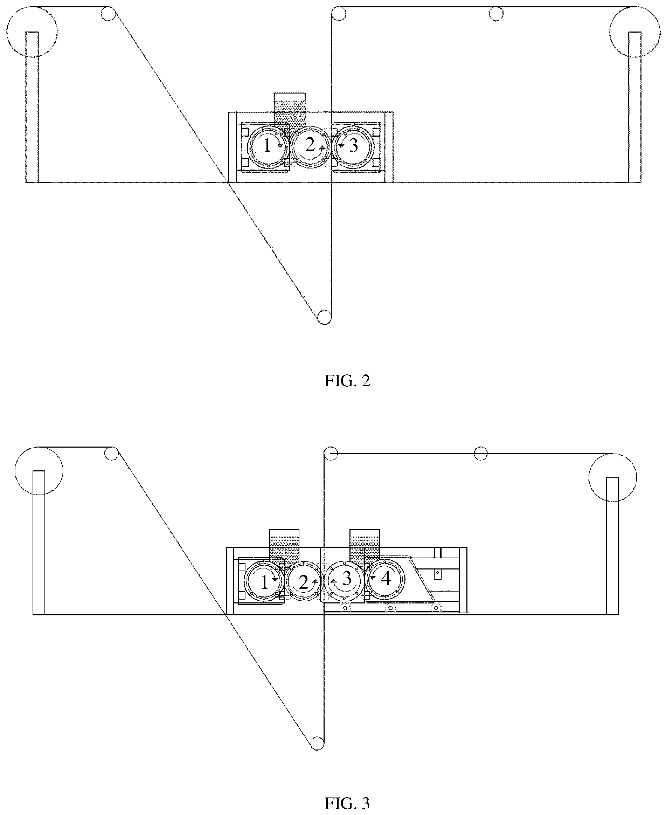

The schematic diagram of the laminating machine in this embodiment is shown in FIG. 2, the roll 1 and the roll 2 of the laminating machine preformed the mixed particles, and the roll 2 and the roll 3 formed the preformed mixed particles with the current collector into the diaphragm.

The test results of the positive electrode sheet prepared in this example are shown in Table 1

### Example 2

This embodiment is prepared according to the following method:
(1) same as step (1) of Example 1
(2) the mixed particles mentioned described in step (1) were formed with a four-roll laminating machine (the distance between roll 1 and roll 2 is 0.1 mm, and the distance between roll 3 and roll 4 is 0.1 mm, and the distance between roll 2 and roll 3 is 0.1 mm), at the temperature of 25°C to form a diaphragm with a current collector aluminum foil at a roller speed of 3 r/min, and then placed in the oven at 120°C to bake for 8 h to obtain the positive electrode sheet.

The schematic diagram of the laminating machine in this embodiment is shown in FIG. 3. The roll 1 and the roll 2 of the laminating machine preformed the mixed particles, and the roll 3 and the roll 4 also preformed the mixed particles, the roll 2 and roll 3 formed the preformed mixed particles with the current collector into the diaphragm.

The test results of the positive electrode sheet prepared in this example are shown in Table 1.

### Example 3

This embodiment is prepared according to the following method:
(1) mixing 95wt% lithium iron phosphate with 2.5wt% conductive carbon fully, and then mixing with 2.5% polytetrafluoroethylene binder fully, the mixed particles were prepared by using a high-speed granulator to mix and granulate at a speed of 200 rpm for 1 min ;
(2) the mixed particles described in step (1) were used with the same four-roll laminating machine as in Example 2 to form a positive electrode sheet with a current collector aluminum foil at a temperature of 15 °C with a roller speed of 1 r/min, and then placed in the oven at 200°C to bake for 28 h to obtain the positive electrode sheet.

The test results of the positive electrode sheet prepared in this example are shown in Table 1.

### Example 4

This embodiment was prepared according to the following method:
(1) mixing 85wt% MnO₂ with 7.5wt% conductive carbon fully, and then mixing with 7.5% polytetrafluoroethylene binder fully, the mixed particles were prepared by using a high-speed granulator at a speed of 1200 rpm for 10 min;
(2) The mixed particles described in step (1) were used with the same four-roll laminating machine as in Example 2 to form the negative electrode sheet with a current collector aluminum foil at a temperature of 35 °C with a roller speed of 10 r/min, and then placed in the oven at 240° C to bake for 20 h to obtain the negative electrode sheet.

The test results of the negative electrode sheets prepared in this example are shown in Table 1.

### Comparative Example 1

The preparation method of the electrode sheet of this comparative example was the same as that of Example 1 in other aspects, except that the three-roll laminating machine was not used described in step (2), but two-roll laminating machine (2 rolls) was used.

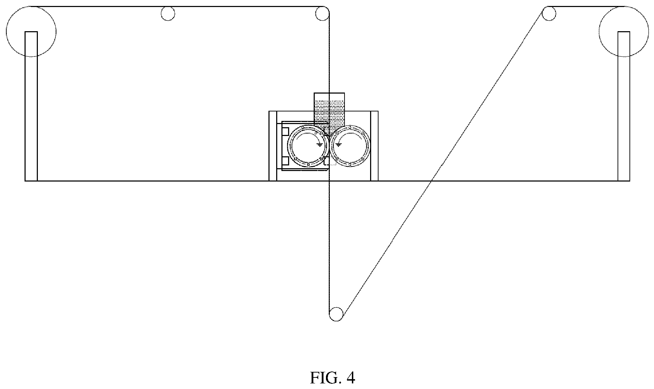

The schematic diagram of the laminating machine of this comparative example is shown in FIG. 4.

The test results of the positive electrode sheet prepared in this comparative example are shown in Table 1.

### Comparative Example 2

The preparation method of the electrode sheet of this comparative example was the same as that of Example 4 in other aspects, except that described in step (2), a three-roll laminating machine was not used instead of a two-roll laminating machine (2 rolls) was used.

The test results of the positive electrode sheet prepared in this comparative example are shown in Table 1.

### Testing method

The electrode sheets provided in each example and comparative example were tested.

A micrometer was used to test the consistency of the thickness of the electrode sheet (characterized by the overall standard deviation of the thickness of three electrode sheets prepared in a certain Example or Comparative Example).

The electrolyte was used to test the liquid absorption under dry conditions (dew point≤-45°C). At -10°C and normal temperature (25°C) the 1 C capacity retention rate of the battery was tested with the Neware test cabinet using standard steps.

### Test standard steps:

Standard charging: when the battery was charged to 3.65 V with a constant current of 1 C (A), it was transferred to constant voltage charging, and the cut-off current was 0.05 C;
Standard discharge: the battery was discharged to 2.50 V at a constant current of 1 C (A);
Standard cycle: standard charge- standby for 0.5 h→standard discharge→standby for 0.5 h;
The electrolyte of Examples 1-3, Comparative Example 1 was composed of solvents (EC, PC, EMC, FB), additives (VC, MMDS), and lithium salt (LiPF₆), and the electrolyte of Example 4 was: ethylene glycol dimethyl ether and propylene carbonate solution of lithium perchlorate; the negative electrode sheets of Examples 1-3 is graphite, and the negative electrode sheet of Example 4 is lithium metal.

The test results are shown in the following table:

**Table 1**

| | Electrode sheets liquid absorption/weight (%) | Overall standard deviation of electrode sheets thickness (mm) | Compared with normal temperature capacity retention at-10° C, 1 C rate (%) |
|---|---|---|---|
| Example 1 | 12% | 0.005 | 88% |
| Example 2 | 13% | 0.003 | 90% |
| Example 3 | 12.8% | 0.004 | 89% |
| Example 4 | 12.5% | 0.005 | 88% |
| Comparative Example 1 | 10% | 0.008 | 85% |
| Comparative Example 2 | 10.5% | 0.007 | 82% |

Combining the above examples and comparative examples, it can be seen that the preparation method of the example can obtain the electrode sheet with relatively good porosity under the condition of maintaining a relatively high compaction density (1.5-3.0 g/cm³) by using a suitable laminating machine cooperating with a granulation process. So that the battery has a better discharge capacity, especially under the conditions of large current and low temperature, and the thickness consistency of the electrode sheet is good.

In Comparative Example 1, because the diaphragm lamination equipment used was not suitable, particles were generated on both sides of the current collector, the uniformity was poor, and the pores formed after rolling were not uniform. Moreover, the diaphragm lamination equipment has a high requirement on the strength of the current collector.

## Claims

1. A preparation method of an electrode sheet, comprising the following steps:
(1) mixing and granulating an active material, a conductive agent, a solvent and a binder to obtain mixed particles; and
(2) performing diaphragm forming on the mixed particles described in step (1) and a current collector in a laminating machine to obtain the electrode sheet, wherein the number of rolls of the laminating machine is 3 or more;
wherein the mixing and granulating of step (1) is performed with a granulator, the method **characterised in that**: a rotating speed of the granulator is 50-1200 rpm, a mixing and granulating time of step (1) is 1-10 min;
a roll spacing of the laminating machine described in step (2) is 0.05-0.5 mm and
a rotation speed of the rollers of the laminating machine described in step (2) is 1-10 r/min.

2. The preparation method according to claim 1, wherein the electrode sheet is a positive electrode sheet or a negative electrode sheet;
optionally, the active material described in step (1) comprising any one or a combination of at least two of manganese dioxide, lithium manganate, lithium cobaltate, lithium nickel cobalt manganate, lithium nickel cobalt aluminate, lithium iron phosphate, graphite and silicon carbon material;
optionally, the conductive agent described in step (1) comprising any one or a combination of at least two of carbon black, graphite, graphene and carbon nanotubes;
optionally, the binder described in step (1) comprising any one or a combination of at least two of styrene-butadiene rubber, polytetrafluoroethylene, polyvinyl fluoride, sodium carboxymethyl cellulose, polyvinylidene fluoride and lithium polyacrylate;
optionally, the solvent is any one or a combination of at least two of water, ethanol, ethylene glycol, glycerol, isopropanol, n-butanol, 1-methyl pyrrolidone and N,N-dimethylformamide.

3. The preparation method according to claim 1 or 2, wherein a mass ratio of the active material, the conductive agent, the solvent and the binder described in step (1) is (58-88):(1-6):(10-30):(1-6).

4. The preparation method according to any one of claims 1 to 3, wherein the current collector described in step (2) comprises any one or a combination of at least two of steel mesh, aluminum mesh, copper mesh, nickel mesh, aluminum foil and copper foil combination.

5. The preparation method according to any one of claims 1 to 4, wherein a temperature of the diaphragm forming described in step (2) is 15-35°C;
optionally, the laminating machine described in step (2) is a three-roll laminating machine or a four-roll laminating machine.

6. The preparation method according to any one of claims 1 to 5, wherein step (2) further comprises baking the product obtained after the diaphragm forming;
optionally, a baking temperature is 100-300°C;
optionally, a baking time is 5-28 h.

7. The preparation method according to any one of claims 1 to 6, wherein the method comprises the following steps:
(1) mixing and granulating an active material, a conductive agent and a binder in a granulator for 1-10 min to obtain mixed particles;
(2) performing diaphragm forming on the mixed particles described in step (1) and a current collector in a laminating machine, and after the diaphragm forming, an obtained product is baked at 100-300°C for 5-28 h to obtain the electrode sheet, wherein the laminating machine is a three-roll laminating machine or a four-roll laminating machine;
wherein the electrode sheet is a positive electrode sheet or a negative electrode sheet;
the active material described in step (1) including any one or a combination of at least two of manganese dioxide, lithium manganate, lithium cobaltate, lithium nickel cobalt manganate, lithium nickel cobalt aluminate, lithium iron phosphate, graphite and silicon carbon materials;
the conductive agent described in step (1) including any one or a combination of at least two of carbon black, graphite, graphene and carbon nanotubes;
the binder described in step (1) including any one or a combination of at least two of styrene-butadiene rubber, polytetrafluoroethylene, polyvinyl fluoride, sodium carboxymethyl cellulose, polyvinylidene fluoride and lithium polyacrylate;
the solvent described in step (1) is any one or a combination of at least two of water, ethanol, ethylene glycol, glycerol, isopropanol, n-butanol, 1-methyl pyrrolidone and N,N-dimethylformamide;
a mass ratio of the active material, the conductive agent, the solvent and the binder described in step (1) is (58-88):(1-6):(10-30):(1-6);
the current collector described in step (2) including any one or a combination of at least two of steel mesh, aluminum mesh, copper mesh, nickel mesh, aluminum foil and copper foil; and
a roller spacing of the laminating machine described in step (2) is 0.05-0.25 mm; a rolling speed of the laminating machine described in step (2) is 1-10 r/min.

## Patentansprüche

1. Verfahren zur Herstellung einer Elektrodenfolie, umfassend die folgenden Schritte:
(1) Mischen und Granulieren eines aktiven Materials, eines leitfähigen Mittels, eines Lösungsmittels und eines Bindemittels, um gemischte Partikel zu erhalten; und
(2) Durchführen einer Membranbildung an den in Schritt (1) beschriebenen gemischten Partikeln und einem Stromkollektor in einer Laminiermaschine, um die Elektrodenfolie zu erhalten, wobei die Anzahl der Walzen der Laminiermaschine 3 oder mehr beträgt;
wobei das Mischen und Granulieren in Schritt (1) mit einem Granulator durchgeführt wird, wobei das Verfahren **dadurch gekennzeichnet ist, dass**, eine Drehzahl
des Granulators 50 bis 1200 U/min und eine Misch- und Granulierzeit in Schritt (1) 1 bis 10 Minuten beträgt;
ein Walzenabstand der in Schritt (2) beschriebenen Laminiermaschine 0,05 bis 0,5 mm beträgt und
eine Drehzahl der Walzen der in Schritt (2) beschriebenen Laminiermaschine 1 bis 10 U/min beträgt.

2. Herstellungsverfahren nach Anspruch 1, wobei die Elektrodenfolie eine positive Elektrodenfolie oder eine negative Elektrodenfolie ist;
wobei das in Schritt (1) beschriebene aktive Material optional eines oder eine Kombination von mindestens zwei der folgenden Stoffe umfasst: Mangandioxid, Lithiummanganat, Lithiumkobaltat, Lithiumnickelkobaltmanganat, Lithiumnickelkobaltaluminat, Lithiumeisenphosphat, Graphit und Siliziumkohlenstoffmaterial;
wobei das in Schritt (1) beschriebene leitfähige Mittel optional eines oder eine Kombination von mindestens zwei der folgenden Stoffe umfasst: Ruß, Graphit, Graphen und Kohlenstoffnanoröhren;
wobei das in Schritt (1) beschriebene Bindemittel optional eines oder eine Kombination von mindestens zwei der folgenden Stoffe umfasst: Styrol-Butadien-Kautschuk, Polytetrafluorethylen, Polyvinylfluorid, Natriumcarboxymethylcellulose, Polyvinylidenfluorid und Lithiumpolyacrylat;
wobei das Lösungsmittel optional eines oder eine Kombination von mindestens zwei der folgenden Stoffe ist: Wasser, Ethanol, Ethylenglykol, Glycerin, Isopropanol, n-Butanol, l-Methylpyrrolidon und N,N-Dimethylformamid.

3. Herstellungsverfahren nach Anspruch 1 oder 2, wobei ein Massenverhältnis des aktiven Materials, des leitfähigen Mittels, des Lösungsmittels und des Bindemittels, wie sie in Schritt (1) beschrieben sind, (58-88):(1-6):(10-30):(1-6) beträgt.

4. Herstellungsverfahren nach einem der Ansprüche 1 bis 3, wobei der in Schritt (2) beschriebene Stromkollektor eine oder eine Kombination von mindestens zwei der folgenden Stoffe umfasst: Stahlgewebe, Aluminiumgewebe, Kupfergewebe, Nickelgewebe, Aluminiumfolie und Kupferfolie.

5. Herstellungsverfahren nach einem der Ansprüche 1 bis 4, wobei eine Temperatur der in Schritt (2) beschriebenen Membranbildung 15°C bis 35°C beträgt;
wobei die in Schritt (2) beschriebene Laminiermaschine optional eine Dreiwalzen-Laminiermaschine oder eine Vierwalzen-Laminiermaschine ist.

6. Herstellungsverfahren nach einem der Ansprüche 1 bis 5, wobei der Schritt (2) ferner das Backen des nach der Membranbildung erhaltenen Produkts umfasst;
wobei eine Backtemperatur optional 100°C bis 300°C beträgt;
wobei eine Backzeit optional 5 bis 28 Stunden beträgt.

7. Herstellungsverfahren nach einem der Ansprüche 1 bis 6, wobei das Verfahren die folgenden Schritte umfasst:
(1) Mischen und Granulieren eines aktiven Materials, eines leitfähigen Mittels und eines Bindemittels in einem Granulator für 1 bis 10 Minuten, um gemischte Partikel zu erhalten;
(2) Durchführen einer Membranbildung an den in Schritt (1) beschriebenen gemischten Partikeln und einem Stromkollektor in einer Laminiermaschine und Backen eines erhaltenen Produkts bei 100°C bis 300°C für 5 bis 28 Stunden nach der Membranbildung, um die Elektrodenfolie zu erhalten, wobei die Laminiermaschine eine Dreiwalzen-Laminiermaschine oder eine Vierwalzen-Laminiermaschine ist;
wobei die Elektrodenfolie eine positive Elektrodenfolie oder eine negative Elektrodenfolie ist;
wobei das in Schritt (1) beschriebene aktive Material mindestens eines oder eine Kombination von mindestens zwei der folgenden Stoffe umfasst: Mangandioxid, Lithiummanganat, Lithiumkobaltat, Lithiumnickelkobaltmanganat, Lithiumnickelkobaltaluminat, Lithiumeisenphosphat, Graphit und Siliziumkohlenstoffmaterialien;
wobei das in Schritt (1) beschriebene leitfähige Mittel mindestens eines oder eine Kombination von mindestens zwei der folgenden Stoffe umfasst: Ruß, Graphit, Graphen und Kohlenstoffnanoröhren;
wobei das in Schritt (1) beschriebene Bindemittel mindestens eines oder eine Kombination von mindestens zwei der folgenden Stoffe umfasst: Styrol-Butadien-Kautschuk, Polytetrafluorethylen, Polyvinylfluorid, Natriumcarboxymethylcellulose, Polyvinylidenfluorid und Lithiumpolyacrylat;
wobei das in Schritt (1) beschriebene Lösungsmittel eines oder eine Kombination von mindestens zwei der folgenden Stoffe ist: Wasser, Ethanol, Ethylenglykol, Glycerin, Isopropanol, n-Butanol, l-Methylpyrrolidon und N,N-Dimethylformamid;
wobei ein Massenverhältnis des aktiven Materials, des leitfähigen Mittels, des Lösungsmittels und des Bindemittels, wie sie in Schritt (1) beschrieben sind, (58-88):(1-6):(10-30):(1-6) beträgt;
wobei der in Schritt (2) beschriebene Stromkollektor eines oder eine Kombination von mindestens zwei der folgenden Stoffe umfasst: Stahlgewebe, Aluminiumgewebe, Kupfergewebe, Nickelgewebe, Aluminiumfolie und Kupferfolie; und
wobei ein Walzenabstand der in Schritt (2) beschriebenen Laminiermaschine 0,05-0,25 mm und eine Walzgeschwindigkeit der in Schritt (2) beschriebenen Laminiermaschine 1-10 U/min beträgt.

## Revendications

1. Procédé de préparation d'une plaque d'électrode, comprenant les étapes suivantes :
(1) mélanger et granuler un matériau actif, un agent conducteur, un solvant et un liant pour obtenir des particules mélangées ; et
(2) effectuer une formation de diaphragme sur les particules mélangées décrites à l'étape (1) et un collecteur de courant dans une lamineuse pour obtenir la plaque d'électrode, le nombre de rouleaux de la lamineuse étant de 3 ou plus ;
dans lequel le mélange et la granulation à l'étape (1) sont effectués avec un granulateur, le procédé est **caractérisé en ce que** :
une vitesse de granulation est de 50 à 1200 tr/min, une durée de mélange et de granulation à l'étape (1) est de 1 à 10 min ;
un espacement de rouleaux de la lamineuse décrite à l'étape (2) est de 0,05 à 0,5 mm et
une vitesse de rotation des rouleaux de la lamineuse décrite à l'étape (2) est de 1 à 10 tr/min.

2. Procédé de préparation selon la revendication 1, dans lequel la plaque d'électrode est une plaque d'électrode positive ou une plaque d'électrode négative ;
éventuellement, le matériau actif décrit à l'étape (1) comprend l'un ou une combinaison d'au moins deux parmi le dioxyde de manganèse, le manganate de lithium, le cobaltate de lithium, le manganate de lithium-nickel-cobalt, l'aluminate de lithium-nickel-cobalt, le phosphate de lithium-iron, le graphite et un matériau de silicium-carbone ;
éventuellement, l'agent conducteur décrit à l'étape (1) comprend l'un ou une combinaison d'au moins deux parmi le noir de carbone, le graphite, le graphène et les nanotubes de carbone ;
éventuellement, le liant décrit à l'étape (1) comprend l'un ou une combinaison d'au moins deux parmi le caoutchouc styrène-butadiène, le polytétrafluoroéthylène, le polyfluorure de vinyle, la cellulose carboxyméthyle sodique, le fluorure de polyvinylidène et le polyacrylate de lithium ;
éventuellement, le solvant est l'un ou une combinaison d'au moins deux parmi l'eau, l'éthanol, l'éthylène glycol, le glycérol, l'isopropanol, le n-butanol, le 1-méthyl pyrrolidone et le N,N-diméthylformamide.

3. Procédé de préparation selon la revendication 1 ou 2, dans lequel un rapport massique entre le matériau actif, l'agent conducteur, le solvant et le liant décrit à l'étape (1) est (58-88) : (1-6) : (10-30) : (1-6).

4. Procédé de préparation selon l'une quelconque des revendications 1 à 3, dans lequel le collecteur de courant décrit à l'étape (2) comprend l'un ou une combinaison d'au moins deux parmi un maillage d'acier, un maillage d'aluminium, un maillage de cuivre, un maillage de nickel, une combinaison de feuille d'aluminium et de feuille de cuivre.

5. Procédé de préparation selon l'une quelconque des revendications 1 à 4, dans lequel une température de formation de diaphragme décrite à l'étape (2) est de 15 à 35°C ;
éventuellement, la lamineuse décrite à l'étape (2) est une lamineuse à trois rouleaux ou une lamineuse à quatre rouleaux.

6. Procédé de préparation selon l'une quelconque des revendications 1 à 5, dans lequel l'étape (2) comprend en outre griller le produit obtenu après la formation de diaphragme ;
éventuellement, une température de grillage est de 100 à 300°C ;
éventuellement, une durée de grillage est de 5 à 28 h.

7. Procédé de préparation selon l'une quelconque des revendications 1 à 6, dans lequel le procédé comprend les étapes suivantes :
(1) mélanger et granuler un matériau actif, un agent conducteur et un liant dans un granulateur pendant 1 à 10 min pour obtenir des particules mélangées ;
(2) effectuer une formation de diaphragme sur les particules mélangées décrites à l'étape (1) et un collecteur de courant dans une lamineuse, et après la formation de diaphragme, griller le produit obtenu à 100 à 300°C pendant 5 à 28 h pour obtenir la plaque d'électrode, la lamineuse étant une lamineuse à trois rouleaux ou une lamineuse à quatre rouleaux ;
dans lequel, la plaque d'électrode est une plaque d'électrode positive ou une plaque d'électrode négative ;
le matériau actif décrit à l'étape (1) comprend l'un ou une combinaison d'au moins deux parmi le dioxyde de manganèse, le manganate de lithium, le cobaltate de lithium, le manganate de lithium-nickel-cobalt, l'aluminate de lithium-nickel-cobalt, le phosphate de lithium-iron, le graphite et des matériaux de silicium-carbone ;
l'agent conducteur décrit à l'étape (1) comprend l'un ou une combinaison d'au moins deux parmi le noir de carbone, le graphite, le graphène et les nanotubes de carbone ;
le liant décrit à l'étape (1) comprend l'un ou une combinaison d'au moins deux parmi le caoutchouc styrène-butadiène, le polytétrafluoroéthylène, le polyfluorure de vinyle, la cellulose carboxyméthyle sodique, le fluorure de polyvinylidène et le polyacrylate de lithium ;
le solvant à l'étape (1) est l'un ou une combinaison d'au moins deux parmi l'eau, l'éthanol, l'éthylène glycol, le glycérol, l'isopropanol, le n-butanol, le 1-méthyl pyrrolidone et le N,N-diméthylformamide ;
un rapport massique entre le matériau actif, l'agent conducteur, le solvant et le liant décrit à l'étape (1) est (58-88) : (1-6) : (10-30) : (1-6) ;
le collecteur de courant décrit à l'étape (2) comprend l'un ou une combinaison d'au moins deux parmi un maillage d'acier, un maillage d'aluminium, un maillage de cuivre, un maillage de nickel, une feuille d'aluminium et une feuille de cuivre ; et
un espacement de rouleaux de la lamineuse décrite à l'étape (2) est de 0,05 à 0,25 mm ; une vitesse de rotation des rouleaux de la lamineuse décrite à l'étape (2) est de 1 à 10 tr/min.
